# EUROPEAN PATENT APPLICATION

(11) **EP 2 922 346 A1**
(43) Date of publication of application: **23.09.2015**
(21) Application number: 14305399.9
(22) Date of filing: 21.03.2014
(51) Int. Cl.: H04W 48/04, H04W 36/32

(54) **Estimating the Mobility of a User Equipment roaming through a Wireless Communication Network**

(71) Applicant: ALCATEL LUCENT, 92100 Boulogne-Billancourt (FR)
(72) Inventor: Puddle, Nicola, Swindon, Wiltshire SN5 7DJ (GB); Wong, Shin Horng, Swindon, Wiltshire SN5 7DJ (GB); Brend, Graham, Swindon, Wiltshire SN5 7DJ (GB); Warner, Martin, Swindon, Wiltshire SN5 7DJ (GB)
(74) Representative: Sarup, David Alexander

(57) **Abstract**

A method of estimating a mobility of a user equipment travelling through a wireless communication network is disclosed as well as a computer program for executing the method, the user equipment and the network node. The wireless communication network comprises a plurality of network nodes, each operable to support a radio cell providing a region of radio coverage allowing communication links to be established with the user equipment. The method comprises estimating the mobility of the user equipment through at least one of the radio cells from a length of time that the user equipment resided within the at least one of the radio cells and a value dependent on an estimated size of the at least one of the radio cells. The value dependent on the estimated size is determined in dependence upon a value indicative of a power of a pilot signal broadcast by the network node supporting the at least one of the radio cells.

## Description

### FIELD OF THE INVENTION

The present invention relates to a method of estimating a user equipment mobility within a wireless communication network comprising a plurality of network nodes supporting a plurality of radio cells, a computer program product, network node and user equipment operable to perform that method.

### BACKGROUND

Wireless communications systems are known. In such systems mobile communication devices, often called user equipment or network connectible devices, are operable to communicate with each other via a core network.

Network connectible devices for example, mobile telephones, or wireless devices such as iPads or other similar tablets, roam through a wireless communication system. Network nodes or base stations are typically provided which support geographical areas of radio coverage known as cells. A number of such base stations are provided and are distributed geographically in order to provide a wide area of radio coverage to network connectible devices.

When network connectible devices (for example, user equipment) are within an area of radio coverage provided by a base station, active communication links may be established between user equipment and the base station. Traditional base stations provide coverage in relatively large geographical areas and large radio cells supported by such base stations are often referred to as macro cells. It is possible to provide a heterogeneous network (HetNet) where smaller sized cells are provided within macro cells.

There are various reasons why it may be important to know the mobility of a user equipment UE that is roaming the network. For example, in order to provide effective handover parameter settings of the network for a UE, some idea of the mobility of the UE should be known otherwise sub-optimal parameters may be used. Although information on how long a UE spends in each cell might provide sufficient mobility information for a homogeneous network where all cells have similar sizes in a HetNet where cells can have significantly different sizes this information may not be sufficient to provide a reliable estimate of mobility.

In the LTE (long term evolution) or 4G telecommunications system it has been agreed that the following information would be provided as mobility history information transmitted by the UE to the network node. An ordered list of the last 16 visited E-UTRA cells. The list includes cells visited in RRC-Idle and RRC-Connected states and includes an identifier of each cell (CGI) and the duration of stay in the cell. From this the network node can determine the mobility of the UE. However, in order to be able to do so in networks of cells of differing sizes the network node needs to have an idea of the cell size, as the mobility of a UE is related to both the time spent in a cell and its size. The likely cell size can be estimated if the cell type is known and this in turn can be derived from the cell ID, however, to be able to do this a large dynamically managed database within the network is required.

It would be desirable to be able to estimate user equipment mobility within different types of network without undue overheads.

### SUMMARY

A first aspect of the present invention provides a method of estimating a mobility of a user equipment travelling through a wireless communication network, said wireless communication network comprising a plurality of network nodes, each operable to support a radio cell providing a region of radio coverage allowing communication links to be established with said user equipment, comprising: estimating said mobility of said user equipment through at least one of said radio cells from a length of time that said user equipment resided within said at least one of said radio cells and a value dependent on an estimated size of said at least one of said radio cells, said value dependent on said estimated size being determined in dependence upon a value indicative of a power of a pilot signal broadcast by said network node supporting said at least one of said radio cells.

The present invention recognises that when determining mobility, although the length of time that a UE spends within a radio cell is one indication of mobility, where cells have different sizes then such variations in size should also be considered when estimating mobility if a reliable estimation is to be achieved. However, determining a size of a cell may not be straightforward. Each cell has its own ID and this ID can be used to identify the type of cell which will provide an indication of size, however, in order to derive this information from the cell ID a database of cell IDs will need to be maintained and accessed. This has a significant overhead in data storage and communication.

The inventors of the present invention realised that the pilot signals broadcast by network nodes have different transmission powers and these depend on the cell size, the larger the cell size the higher the power required. Thus, this information which is readily available provides an indication of cell size which could be used in any cell size estimation. Thus, a value indicative of the power of a pilot signal can be used to provide a value indicative of estimated cell size. This latter value could then be used in a mobility estimation in conjunction with the time spent in one or more cells to provide a more reliable estimation of UE mobility. It should be noted that UE mobility relates to how fast a UE is moving and therefore how many cells it travels though in a certain time. Although it may simply relate to speed, some indications of mobility may also contain trajectory information.

In some embodiments, said step of estimating said mobility of said user equipment comprises weighting said length of time spent in said at least one cell by a weighting factor derived from said value dependent on said estimated radio cell size.

Although the estimated size or value dependent on the estimated radio cell size can be used in a number of ways in the estimation of the mobility of the user equipment, in some embodiment it is used to generate a weighting factor which is then used to weight the length of time spent in the cell. In this regard, although the length of time spent in a cell is an indication of user equipment speed or mobility clearly the size of the cell also affects this. Thus, one way of generating a mobility indication is to weight the time spent in a cell by the size of the cell, such that where a cell is larger, then a smaller weighting is used. This weighting reflects the fact that it will of course typically take longer for a user equipment travelling at constant speed to travel through a larger cell than it would to travel through a smaller cell. In order for the values to be comparable they can be adjusted by a weighting value indicative of cell size.

In some embodiments, said step of estimating said mobility of said user equipment comprises estimating said mobility of said user equipment through a plurality of said radio cells.

Although the mobility of user equipment going through one radio cell can be estimated, in some embodiments, the mobility of user equipment is estimated as it travels through multiple radio cells. This provides a more reliable indication of its mobility.

In some embodiments, the method comprises a further step of determining whether said estimated mobility meets at least one predetermined mobility threshold criteria and if so setting at least one high mobility state indicator to indicate that said user equipment is a high mobility user equipment.

Although mobility may be estimated as a mobility value, in some embodiments one or more thresholds are used and if the mobility of the user equipment is determined to meet a particular threshold criteria, then the state of the user equipment may be set indicate a particular high mobility state.

In some embodiments, said method is performed at one of said plurality of network nodes that said user equipment is currently in communication with, said method comprising an initial step of receiving a mobility history indicating said length of time that said user equipment resided within said at least one radio cell and said value indicative of said power of said pilot signal broadcast by said network node supporting said at least one radio cell.

Although, the method of estimating the mobility of the user equipment can be performed on the user equipment, it can also be performed at the network node. In this regard, mobility history of the user equipment will be received at the network node either from the user equipment itself or from a neighbouring network node. Such a mobility history will indicate the length of time that the user equipment resided within at least one previous radio cell along with a value indicative of the power of the pilot signal broadcast by the network node of that cell. This information can then be used by the network node to estimate the mobility of the user equipment.

In some embodiments, the method comprises a further step of transmitting said estimate and said user equipment mobility to at least one of said user equipment and said at least one neighbouring network node.

Where the user equipment mobility is calculated at the network node, then this information maybe transmitted to the user equipment as this information is valuable to user equipment in reselections. The mobility value influences things such as the time period that the UE uses between the reselections.

The network node may also transmit information about the user equipment mobility to neighbouring network nodes as part of the UE history information perhaps in a SRNS (serving radio network subsystem) relocation message. This enables the neighbouring node to set appropriate handover parameters when the user equipment does connect to it.

In other embodiments, the method is performed at the user equipment and further comprises communicating said estimated mobility to said wireless communication network.

Although, as mentioned previously the user equipment mobility may be estimated at a network node, in some embodiments it is estimated at the user equipment itself in which case the user equipment will communicate its estimated mobility to the wireless communication network. This communication may be in the form of a radio resource control (RRC) Connection Request or in a Cell Update message where the UE may report a UE Mobility State Indicator indicating its current mobility state. This can be used by the network node when setting handover parameters for example and also in estimating the trajectory of the user equipment and the network nodes to which it may handover shortly.

In some embodiments, the method comprises a further step of comparing said power of said pilot signal with one of a predetermined number of threshold values and deriving a weighting value from said comparison and using said weighting value as said value indicative of said power of said pilot signal when determining said value indicative of said estimated cell size.

As noted previously the power of the pilot signal will provide an indication of cell size. When using such information in an estimation of mobility, in some cases the power is simply compared with threshold values and a suitable weighting value indicative of estimated size is used. In this regard, there may not be many different sizes of cells and thus, using thresholds to pick one of a few weighting values may be a convenient and efficient way of providing a suitable estimation in the mobility calculation.

In other embodiments, the method comprises a further step of determining a ratio of said power of said pilot signal and a maximum pilot power value of a pilot signal of said network nodes within said communication network and using said ratio to determine a weighting value for use as said value indicative of said power of said pilot signal when determining said value indicative of said estimated cell size.

Alternatively, a ratio of the power of the pilot signal to a maximum pilot power value for the network nodes within the communication network can be used as a weighting value in the estimation of cell size. Such a factor provides an indication of the different cell sizes and can be used to weight the time spent in each cell size, for example when determining mobility.

In still other embodiments, the method comprises a further step of receiving said value indicative of said power of said pilot signal of said network node as a weighting value broadcast from said network node.

In some embodiments, in addition to or instead of receiving a power of the pilot signal from the network node, a weighting value that is indicative of its power may be broadcast by the network node and this value can be used as the weighting factor in the size estimation calculation.

In some embodiments, the method comprises determining whether said user equipment is in a high mobility state by, for a predetermined number of radio cells, weighting said time spent in each of said predetermined number of radio cells with said weighting value of said radio cell to provide an estimated mobility value for said radio cell and generating an estimated mobility for said predetermined number of radio cells by combining said estimated mobility values for said predetermined number of radio cells and determining whether said estimated mobility for said predetermined number of radio cells meets a mobility threshold criteria.

In some cases, determining whether a user equipment is in a high mobility state or not may be done by determining whether there are a certain number of cell reselections within a certain time. In order to do this and take account of cell size such that the mobility calculation is not distorted by different size cells, the time spent in each of the radio cells can be weighted with a weighting value which is indicative of an estimation of the cell size and determined from the pilot power transmission strength. In this way, a weighted value for a number ofreselections within a certain time can be detected and a mobility that has been moderated for cell size can be determined.

Although, this method will work for many different types of wireless communication networks it is particularly applicable to a heterogeneous network where radio cells have different sizes and correspondingly different pilot signal transmission powers. It is in these networks where the problem of distortions in the mobility calculations generally arise and where embodiments of the present method are particularly applicable.

A second aspect of the present invention provides a computer program which when executed by a computer is operable to control said computer to perform the method of the first aspect of the present invention.

A third aspect of the present invention provides a network node configured to estimate a mobility of a user equipment travelling through a wireless communication network, said wireless communication network comprising said network node and a plurality of further network nodes, each operable to support a radio cell providing a region of radio coverage allowing communication links to be established with said user equipment, comprising: communication circuitry for communicating with said user equipment; said communication circuitry being operable to receive a mobility history from said user equipment indicating a length of time that said user equipment resided within at least one radio cell and a value indicative of a power of a pilot signal broadcast by said network node supporting said at least one radio cell; estimation logic operable to determine a value dependent on an estimated size of said at least one radio cell in dependence upon a value indicative of a power of a pilot signal broadcast by said network node supporting said at least one of said radio cells and to estimate said mobility of said user equipment through said at least one said radio cell from said length of time that said user equipment resided within said at least one radio cell and said value dependent on said estimated size of said at least one radio cell.

In some embodiments, said network node is configured to broadcast a pilot signal and to broadcast a weighting value indicative of a power of said pilot signal.

Although, a network node maybe configured to calculate the user equipment mobility, this does not mean that the user equipment may not also independently calculate the mobility itself. In this regard, the user equipment may update its mobility status either from its own calculations or from an instruction to do so received from the network node. In some cases, the network node may broadcast a weighting value as well as a pilot signal, the weighting value depending on the power of that pilot signal. This weighting value can be used by the user equipment in its estimations of the mobility of the user equipment to moderate the time spent in the various cells by a value that is indicative of an estimation of the size of the cells.

A fourth aspect of the present invention provides a user equipment operable to determine a mobility with which said user equipment travels through a wireless communication network, said wireless communication network comprising a plurality of network nodes, each operable to support a radio cell providing a region of radio coverage allowing communication links to be established with said user equipment, said user equipment comprising: estimation logic operable to: estimate a size of at least one radio cell that said user equipment has travelled through in dependence upon a value indicative of a power of a pilot signal broadcast by said network node supporting said at least one of said radio cells; and estimate said mobility of said user equipment through said at least one said radio cell from said length of time that said user equipment resided within said at least one radio cell and said estimated size of said at least one radio cell.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically illustrates a number of cells of different sizes and a user equipment trajectory;
Figure 2 schematically illustrates a network node and user equipment according to an embodiment of the present invention;
Figure 3 shows a flow diagram illustrating steps in a method performed at a user equipment according to an embodiment of the present invention; and
Figure 4 shows a flow diagram illustrating steps in a method performed at a network node according to an embodiment of the present invention;

### DESCRIPTION OF THE EMBODIMENTS

Before discussing the embodiments in any more detail, first an overview will be provided.

The basic idea of embodiments of the present invention is to utilise the fact that typically a cell's size is related to its transmit power (of its pilot signal) and to use this information when estimating a UE's mobility state. Thus, an estimated size of the cell can be gained from the pilot signal power and may be used as a weighting factor to adjust the time spent in a cell to account for its size, such that the moderated values for each cell are an indication of mobility and can be combined and compared.

The mobility estimations may be performed at the user equipment or at the network node and an indication of the result communicated between them.

In UMTS (universal mobile telecommunication system) which is a third generation or 3G system a mobility state indicator for a UE is currently used which has a single value "high mobility detected".

This may be transmitted in the RRC Connection Request and Cell Update messages. It may also be sent as part of a reconfiguration or release procedure. The network can also instruct the UE that it considers the UE to have high mobility, which is then used by the UE for subsequent reselections (i.e. scaling with the IE "Speed dependent Scaling Factor for T-reselection", which affects the timing between cell reselections). The information may also be part of the UE history information in the SRNS relocation message that is sent from one node to another that also includes the "UE Mobility State Indicator" IE.

In this regard the high mobility state is set for a UE where the UE detects the number of cell reselections during time period T_{CRmax} to be the same or greater than N_{CR}, or where the network (via RRC signalling) has ordered the UE to consider itself as a high mobility device. Conversely if the high-mobility state does not continue to be detected during time period T_{CrmaxHyst} a UE exits that state.

As an example, in a homogenous network in a dense urban environment, the diameter of each UMTS cell is typically about 1.5 km and the high-speed limit can be viewed as 90 km/h. This means that a UE travelling at that high-speed would perform a Cell Reselection every 60s. In such a deployment scenario the operator may typically set N_{CR} to 2 and T_{CRmax} to 120.

Hence in a homogenous network the settings for High Mobility Detection (T_{CRmax} T_{CrmaxHyst} and N_{CR}) would normally be based on the macro cell size. However in a Heterogeneous network the sizes of cells varies and the number of reselections and hence determined "speed" for any one UE is very dependent upon the route taken by that UE. This means that a UE detecting High Mobility based on the number of reselections in a certain time, which in turn depends on time spent in each cell, is very likely to be unreliable. Therefore in a HetNet deployment using the Mobility State Indicator from the UE to determine the UE's mobility state is likely to be unreliable.

Hence it would be beneficial to introduce a mechanism that can provide a reliable estimation of a UE's speed in UMTS HetNets. Alternatively a mechanism that is an enhancement to the functionality supporting the existing IE "UE Mobility State Indicator" would be useful.

In an embodiment of the present invention the power of each cell through which a UE has transited is included in the UE Mobility History Information IE. For example in UMTS , the Primary CPICH (common pilot channel) Tx (transmission) power, which is broadcast by each cell in the Network in system information block SIB5/5bis/6, is reported in the log of the UE mobility History Information together with the time the UE spent in each cell. This allows the network to utilise this information to estimate the UE's speed or mobility based on the approximate cell size for each cell through which the UE has transited.

In an alternative embodiment the calculation by the UE of the value of the UE Mobility State Indicator IE (which may in one embodiment be a single HighmobilityDetected value or may in other embodiments be one of several values indicating different levels of mobility) is reformulated to be weighted by the cell size of each cell that the UE visits. The weighting applied by the UE for each cell is determined from the pilot (e.g. CPICH in UMTS) TX power broadcast by said each cell. Such a weighting can be a simple threshold configured in the UE and based on the value of the cell's CPICH TX Power detected by the UE and would identify small cells from macro cells. The UE would thus calculate an appropriate value of the UE mobility State indication based on the time it spent in each cell together with the cell weighting.

In a further embodiment different cell sizes would be expected to have different pilot (e.g PCPICH) Tx powers and therefore different weightings. Hence a UE can derive an appropriate weighting to apply in its calculation of its mobility state indicator, based on a plurality of pilot (e.g. Primary CPICH TX) power thresholds, with each threshold being associated with a specific weighting and the plurality of thresholds being configured in the UE. Such an embodiment allows different sizes/ types of small cells to be supported in this determination.

In another embodiment, the weighting is a function of the ratio of the pilot power to the maximum pilot power (e.g. pilot power of macro cell). For example if the pilot power of a small cell is 24 dBm and the maximum power of a macro cell is 43 dBm then the weighting applied to this small cell is 24/43.

In a related embodiment each cell is configured to broadcast a weighting based on its pilot (e.g. CPICH) TX Power, said weighting being broadcast in the same SIB as other mobility related parameters. In this embodiment the UE would apply the same calculation as in the previous embodiments, but would not be configured with weightings, rather it would use the broadcasted weighting.

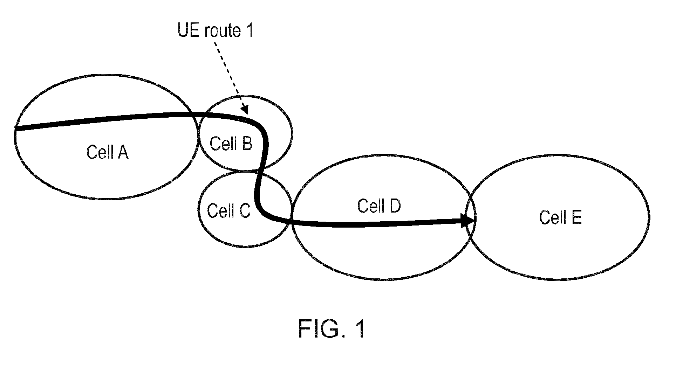

Figure 1 schematically shows a UE trajectory through a plurality of different sized cells within a HetNet. The HetNet is deployed such that it includes macro cells A, D &E, which have a cell diameter of 1.5 km and small cells B & C both of which have a diameter half the size of the macro cells. The operator has determined that UEs that travel at 90 km/h should be considered as high speed, and those below that should not.

In the example 2 UEs move through the HetNet following the same path, namely reselecting from Cell A->B->C->D, then connecting to the network in cell E. The operator has configured the relevant speed detection mobility parameters, with N_{CR} set to 2 and T_{CRmax} to 120. In this example the cells also broadcast a weighting factor in the SIB together with the N_{CR} and T_{CRmax} values, in this case said weighting factor is set to 2 for small cells.

In this example the first UE is assumed to be moving at a constant 90km/h. Hence the UE would typically spend 60s transiting through cell D, 30s in cell C, 30s in cell B, and 60s in cell A. The UE uses knowledge of the CPICH TX Power broadcast by each cell to determine which are the small cells, together with the weighting factor to determine the UE speed or mobility. Hence using the new formulation, time spent in cell multiplied by weighting, the UE calculates that it spent 60s in cell D, 60s in cell C, 60s in cell B, and 60s in cell A.

Then taking the last 120s into account (T_{CRmax}), the UE determines that during time period T_{CRmax} it has performed 2 reselections and since N_{CR} is set to 2 the UE reports to cell E that high mobility is detected.

A second UE also follows the same path through the HetNet but in this case the UE is assumed to be moving at a constant 60km/h. In this case the UE would typically spend 90s in cell D, 45s in cell C, 45s in cell B, and 90s in cell A.

In this case using the conventional method (i.e. not the suggested enhanced method of the current application) in the last 120s the UE performed 2 reselections and since N_{CR} is set to 2 the UE would report high mobility detected (as for the first UE). However this determination is unreliable as the impact of deploying different size cells is ignored.

Were the method of an embodiment of the current invention to be used taking weighting into account, the calculation becomes 90s in cell D, 90s in cell C, 90s in cell B, and 90s in cell A.

Therefore taking the last 120s into account (T_{CRmax}), the UE determines that during time period T_{CRmax} it performed 1 reselection and since N_{CR} is set to 2 the UE reports to cell E that high mobility is NOT detected. This is thus aligned with the operator's wishes in classifying high and non high speed UEs.

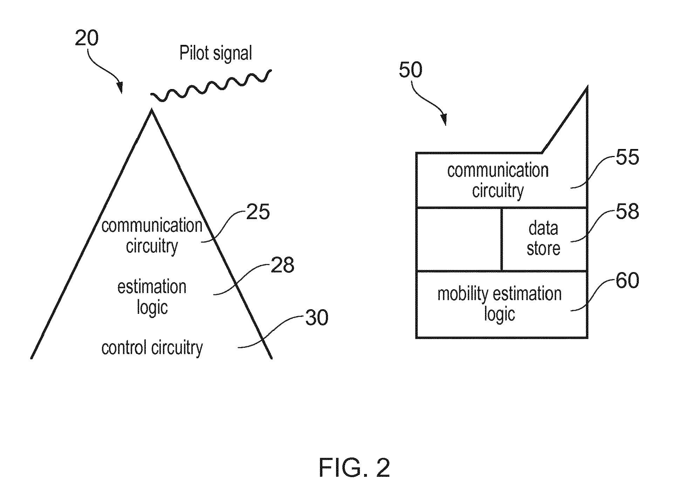

Figure 2 schematically shows a network node or base station 20 which supports a radio cell that provides radio coverage within an area for user equipment 50 that may be roaming within the area. Base station 20 comprises communication circuitry 25 which can transmit and receive signals, estimation logic 28 and control circuitry 30 for controlling the base station 20.

Base station 20 will transmit data and control signals for receipt by user equipment 50. It will also broadcast a pilot signal such that user equipment within the cell can detect and can identify a nearby base station. It is important that the pilot signal can be received throughout the radio cell and the network node 20 is therefore configured such that it is transmitted with the appropriate power. This may be controlled by control circuitry 30.

In addition to transmitting the pilot signal, an indication of the transmission power of this pilot signal is transmitted in the CPICH signal in UMTS. In some embodiments, in addition to transmitting an indication of the power of the pilot signal a weighting value may be transmitted which is dependent on the pilot signal power and may be used by user equipment 50 when estimating the mobility of the user equipment.

Network node 20 has estimation logic 28 which is used in some embodiments to estimate the mobility of user equipment that are currently within its cell but have passed through other cells. The network node 20 will receive UE history information either from the UE itself when it communicates with network node 20 or as part of a SRNS relocation message which is sent from one node to another as the UE moves between network nodes. This UE mobility history will contain information on the time spent in previous cells along with an indication of the transmission power of the pilot signal of these cells.

Estimation logic 28 uses this received information to estimate the mobility of the user equipment. In this regard, the power of the pilot signal is an indication of the size of the cell and can thus be used as a weighting factor to weight the time spent within the cell making the resultant value indicative of the mobility of the user equipment through this cell. These mobility values for each cell can then be combined to generate an overall mobility of the user equipment through several cells. It should be noted that each mobility indicator for each cell provides an indication of mobility through that cell and in some cases the information from a single cell could be used as mobility information. However, as can be understood a more reliable estimation is generally provided where more cells are considered.

Where the user equipment mobility is estimated in the network node 20, then this information is transmitted to user equipment 50 as part of a reconfiguration or release procedure and this indicates to the user equipment that it should consider itself to be a high mobility user equipment or if high mobility was not detected, that it should not consider itself to be a high mobility user equipment. The information will also be used within the network node to make connected mode and handover decisions and for setting the handover parameters that are transmitted to the user equipment.

Alternatively, and/ or additionally, the user equipment 50 may itself estimate its mobility. User equipment 50 has communication circuitry 55 for receiving and transmitting signals to network node 20, it has a data store 58 and mobility estimation logic 60. When moving through cells, it will determine the time sent within a particular cell and will store this information along with an indication of the pilot power of that cell within data store 58. The indication of the pilot power may have the form of a weighting value that is transmitted by the network node and is derived from that pilot signal power, it may be the actual pilot signal power value itself or it may in some embodiments be a weighting value determined by comparing the pilot signal power value with thresholds. Alternatively, it may be a ratio value estimated by dividing the pilot signal power value received with a maximum pilot signal power value of all the network nodes in the communication network. This information is stored in data store 58 and can be used by mobility estimation logic 60 to determine the mobility of the user equipment.

Thus, mobility estimation logic 60 can determine how long is spent in each cell and can weight this time by a value indicative of the cell size which is estimated from the pilot signal power strength. Such a resultant value will provide an estimation of mobility in each cell and these values can be combined over several cells to provide a mobility estimation of the UE through these cells. This value can be compared with certain threshold values to determine whether the user equipment should be considered to have a high mobility or not. In some cases, there are only two mobility states that are considered; high mobility and not high mobility and in this case, a high mobility indicator is set and is transmitted to network node 20 where high mobility is detected. In other embodiments, there may be several mobility levels and this information will be transmitted to the network node.

User equipment 50 will utilise the mobility information during reselection of cells. In this regard, it has a timing value for determining how often it should reselect cells and this is based on rules and parameters that are broadcast by the network and also on the mobility of the user equipment.

It should be noted that the user equipment 50 may also receive instructions from the network node that it should consider itself as a high mobility device, in response to which it will set its high mobility indicator and will use this when determining its reselection parameters.

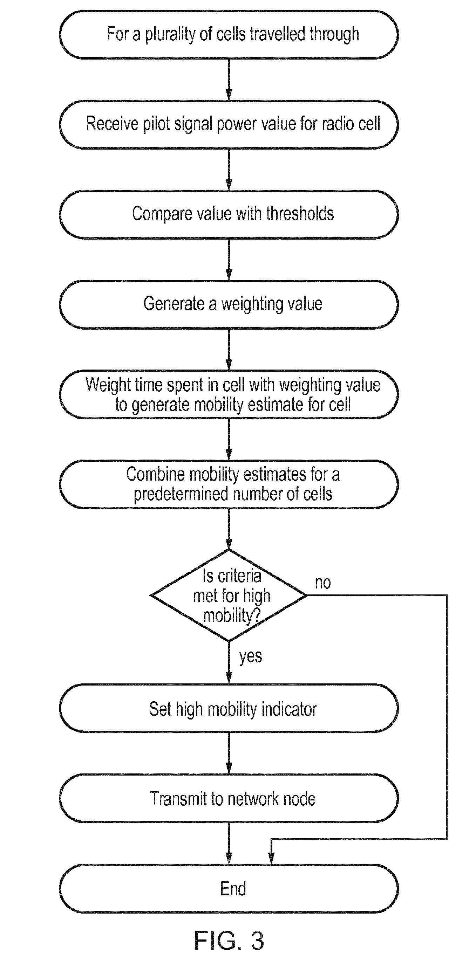

Figure 3 shows a flow diagram illustrating steps in a method performed by user equipment according to an embodiment of the present invention to estimate a mobility value for user equipment travelling through a plurality of cells. In this regard the mobility threshold may be set as a certain number of cell reselections in a certain time in which case the number of cells considered will be the number of cell reselections required in a certain time for a device to be considered to have a high mobility.

The pilot signal power values for each radio cell are received by the user equipment when it is in the cell and are stored by it. In this embodiment they are compared with threshold values. From this comparison, a weighting value is generated by the user equipment and this weighting value is used to weight the time spent in that cell and generate an indicator of mobility for that cell. The mobility indicators for the plurality of cells are combined and it is determined if the resultant value meets the criteria for high mobility. If this criteria is met, then the high mobility indicator is set and this is transmitted to the network node; if not, no high mobility indicator is set and in some embodiments an indication that the user equipment should not be considered a high mobility user equipment is transmitted to the network node while in other embodiments no information is transmitted.

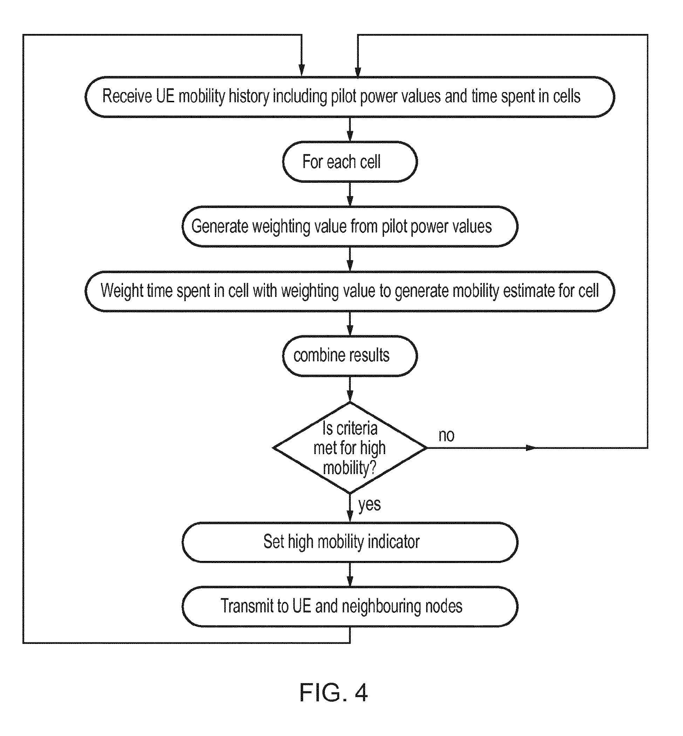

Figure 4 shows a flow diagram illustrating steps in a method performed at a network node. In this method, the user equipment mobility history including pilot power values and time spent in cells is received at the network node. In this regard, it may be received from the user equipment itself or it may be received from a neighbouring network node during a relocation procedure. For each cell, a weighting value is generated from the pilot power value and the time spent in each cell is weighted by the weighting value to generate a mobility indicator for that cell and the results are combined for the cells under consideration. It is then determined if the mobility value that is generated in this way meets a high mobility criteria. If it does a high mobility indicator is set and this may be transmitted to user equipment and neighbouring nodes.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of estimating a mobility of a user equipment travelling through a wireless communication network, said wireless communication network comprising a plurality of network nodes, each operable to support a radio cell providing a region of radio coverage allowing communication links to be established with said user equipment, comprising:
estimating said mobility of said user equipment through at least one of said radio cells from a length of time that said user equipment resided within said at least one of said radio cells and a value dependent on an estimated size of said at least one of said radio cells, said value dependent on said estimated size being determined in dependence upon a value indicative of a power of a pilot signal broadcast by said network node supporting said at least one of said radio cells.

2. A method according to any preceding claim, wherein said step of estimating said mobility of said user equipment comprises weighting said length of time spent in said at least one cell by a weighting factor derived from said value dependent on said estimated radio cell size.

3. A method according to claim 1 or 2, wherein said step of estimating said mobility of said user equipment comprises estimating said mobility of said user equipment through a plurality of said radio cells.

4. A method according to any preceding claim, comprising a further step of determining whether said estimated mobility meets a predetermined mobility threshold criteria and if so setting at least one high mobility state indicator to indicate that said user equipment is a high mobility user equipment.

5. A method according to any preceding claim, said method being performed at one of said plurality of network nodes that said user equipment is currently in communication with, said method comprising an initial step of receiving a mobility history indicating said length of time that said user equipment resided within said at least one radio cell and said value indicative of said power of said pilot signal broadcast by said network node supporting said at least one radio cell.

6. A method according to claim 5, comprising a further step of transmitting said estimate of said user equipment mobility to at least one of said user equipment and at least one neighbouring network node.

7. A method according to any one of claims 1 to 4, said method being performed at said user equipment and further comprising communicating said estimated mobility to said wireless communication network.

8. A method according to claim 7, comprising a further step of comparing said power of said pilot signal with one of a predetermined number of threshold values and deriving a weighting value from said comparison and using said weighting value as said value indicative of said power of said pilot signal when determining said value indicative of said estimated cell size.

9. A method according to claim 7, comprising a further step of determining a ratio of said power of said pilot signal and a maximum pilot power value of said network nodes within said communication network and using said ratio to determine a weighting value for use as said value indicative of said power of said pilot signal when determining said value indicative of said estimated cell size.

10. A method according to claim 7, comprising a further step of receiving said value indicative of said power of said pilot signal of said network node as a weighting value broadcast from said network node.

11. A method according to any one of claims 7 to 10, comprising determining whether said user equipment is in a high mobility state by, for a predetermined number of radio cells, weighting said time spent in each of said predetermined number of radio cells with said weighting value of said radio cell to provide an estimated mobility value for said radio cell and generating an estimated mobility for said predetermined number of radio cells by combining said estimated mobility values for said predetermined number of radio cells and determining whether said estimated mobility for said predetermined number of radio cells meets a mobility threshold criteria.

12. A method according to any preceding claim, wherein said wireless communication network is a heterogeneous network comprising radio cells of significantly difference sizes and correspondingly different pilot signal transmission powers.

13. A computer program which when executed by a computer is operable to control said computer to perform the method of any one of claims 1 to 12.

14. A network node configured to estimate a mobility of a user equipment travelling through a wireless communication network, said wireless communication network comprising said network node and a plurality of further network nodes, each operable to support a radio cell providing a region of radio coverage allowing communication links to be established with said user equipment, comprising:
communication circuitry for communicating with said user equipment;
said communication circuitry being operable to receive a mobility history from said user equipment indicating a length of time that said user equipment resided within at least one radio cell and a value indicative of a power of a pilot signal broadcast by said network node supporting said at least one radio cell;
estimation logic operable to determine a value dependent on an estimated size of said at least one radio cell in dependence upon a value indicative of a power of a pilot signal broadcast by said network node supporting said at least one of said radio cells and to estimate said mobility of said user equipment through said at least one said radio cell from said length of time that said user equipment resided within said at least one radio cell and said value dependent on said estimated size of said at least one radio cell.

15. A user equipment operable to determine a mobility with which said user equipment travels through a wireless communication network, said wireless communication network comprising a plurality of network nodes, each operable to support a radio cell providing a region of radio coverage allowing communication links to be established with said user equipment, said user equipment comprising:
estimation logic operable to:
estimate a size of at least one radio cell that said user equipment has travelled through in dependence upon a value indicative of a power of a pilot signal broadcast by said network node supporting said at least one of said radio cells; and
estimate said mobility of said user equipment through said at least one said radio cell from said length of time that said user equipment resided within said at least one radio cell and said estimated size of said at least one radio cell.
